# EUROPEAN PATENT APPLICATION

(11) **EP 2 590 423 A2**
(43) Date of publication of application: **08.05.2013**
(21) Application number: 12190622.6
(22) Date of filing: 30.10.2012
(51) Int. Cl.: H04N 21/4147, H04N 21/433, H04N 21/442

(54) **Video services receiver for managing incomplete program recordings**

(30) Priority: 01.11.2011 US 201113286944
(71) Applicant: Eldon Technology Limited trading as Echostar Europe, Keighley, Yorkshire BD20 6QW (GB)
(72) Inventor: Dove, Anthony Michael, Bradford, Yorkshire BD13 2LP (GB); Wilson, John, Halifax, Yorkshire HX3 8NP (GB)
(74) Representative: Needle, Jacqueline

(57) **Abstract**

In a method of managing recorded program content, a specified program event is recorded to obtain a first recording (404). It is then determined (406) whether the first recording is complete. When the first recording is incomplete a search is made for a repeated instantiation of the program event (412). Some or all of the repeated instantiation is recorded (418) to obtain a second recording. Thus a complete recording of the program event has been obtained and the complete recording of the program event comprised of the second recording of the program event can be presented (424).

## Description

The present invention relates to a method of managing recorded program content, and to a video services receiver. In particular, the invention relates to the management of incomplete recordings of program events.

Most television viewers now receive their video signals through a content aggregator such as a cable or satellite television provider. Digital video broadcasting (DVB) systems, such as satellite systems, are generally known. A DVB system that delivers video service to a home will usually include a video services receiver, system, or device, which is commonly known as a set-top box (STB). Encoded television signals are sent via a cable or wireless data link to the viewer's home, where the signals are ultimately decoded in the STB. The decoded signals can then be viewed on a television or other appropriate display as desired by the viewer.

A practical implementation of an STB may include or cooperate with a digital video recorder (DVR) that is designed to record video, audio, and/or audiovisual programs received by the STB. The user can then play recorded programs at any convenient time. Moreover, a conventional STB can generate a menu or listing of recorded programs for graphical rendering on a display device, such as a television or a monitor. The user can navigate an onscreen listing of recorded programs to identify or select a program for playback, to delete recorded content, etc.

For various reasons, a recorded program event may not always be complete, i.e., some of the desired content may be missing, corrupted, or otherwise not available for playback. For example, if back-to-back program events are scheduled to be recorded and the first program event runs beyond its normally scheduled stop time, then an ending portion of the first program event, a beginning portion of the second program event, or a combination of both may be truncated from the recorded versions. As another example, if the quality of service associated with the delivery of the video signals to the STB degrades, then a complete recording may not be possible. As yet another example, if the capacity of the data storage element (e.g., a hard disk) is exceeded, then it may not be possible to record all of a program event. Moreover, these issues can arise in a single tuner STB or in a multiple tuner STB, depending upon the current operating conditions, the number of concurrent or back-to-back program events to be recorded, and other factors.

The present invention seeks to solve these problems and to manage or compensate for incomplete recordings that have been recorded by a video services receiver.

According to a first aspect of the present invention, there is provided a method of managing recorded program content at a video services receiver, the method comprising:
identifying, at the video services receiver, an incomplete recording of a program event;
obtaining, at the video services receiver, program-designating information that identifies the program event;
searching, with the video services receiver, available program listings for a repeated instantiation of the program event, wherein the searching is based on the program-designating information;
recording the repeated instantiation of the program event at the video services receiver, to obtain a complete recording of the program event; and
replacing the incomplete recording of the program event with the complete recording of the program event.

In an embodiment, the searching comprises traversing programming data received from a video services system.

Preferably, the searching comprises generating an internet search query for online content corresponding to the program event.

In an embodiment, the method further comprises generating, with the video services receiver, a graphical representation of a listing of recorded program content suitable for presentation on a display, wherein the listing of recorded program content includes an entry for the incomplete recording of the program event, and wherein the entry includes an indicator of an incomplete recording status.

For example, the entry includes a notification of when the repeated instantiation of the program event will be recorded.

The method may further comprise removing the indicator of an incomplete recording status after replacing the incomplete recording of the program event with the complete recording of the program event.

The invention also extends to a method of operating a video services receiver that records program content and presents recorded program content, the method comprising:
recording at least a portion of a program event that is identified by program-designating information, to obtain a first recording of the program event;
determining that the first recording represents an incomplete recording of the program event;
finding a repeated instantiation of the program event that is identified by the program-designating information;
recording at least a portion of the repeated instantiation of the program event, to obtain a second recording of the program event; and
thereafter, presenting a complete recording of the program event, wherein the complete recording of the program event comprises the second recording of the program event.

In an embodiment,
the second recording of the program event includes all of the repeated instantiation of the program event; and
the method further comprises replacing the first recording of the program event with the second recording of the program event.

Preferably, presenting the complete recording of the program event comprises presenting at least some of the first recording of the program event combined with at least some of the second recording of the program event.

Finding the repeated instantiation of the program event may comprise searching programming data received from a video services system.

Preferably, the programming data comprises data selected from the group consisting of: an identifier of a programming service providing the program event; a name of a programming channel; call letters of a programming channel; call numbers of a programming channel; a title of the program event; a series name corresponding to the program event; an episode identifier corresponding to the program event; a parental guidance rating for the program event; a time duration of the program event; a content category, classification, or genre of the program event; a content description for the program event; an alphanumeric identification string; and an identification code.

In an embodiment, the method further comprises generating, with the video services receiver, a graphical representation of a listing of recorded program content suitable for presentation on a display, wherein the listing of recorded program content includes an entry for the first recording of the program event, and wherein the entry includes an indicator of an incomplete recording status.

Preferably, the entry includes a notification of when the repeated instantiation of the program event will be recorded.

The determining may comprise detecting degradation in a signal received at the video services receiver, wherein the signal conveys the program event corresponding to the first recording.

Additionally and/or alternatively, the determining may comprise detecting that the first recording represents a truncated version of the program event.

In an embodiment, the method further comprises receiving a playback command at the video services receiver, wherein the presenting is initiated in response to the playback command.

According to a further aspect of the present invention there is provided a video services receiver for providing recorded and non-recorded content to a user, the video services receiver comprising:
a receiver interface to receive data associated with video services;
a recording module coupled to the receiver interface to record program events provided by the video services;
at least one data storage element coupled to the recording module to store recorded content for the recording module;
a display interface for a display operatively coupled to the video services receiver, the display interface facilitating presentation of recorded and non-recorded program events on the display; and
a processor coupled to the receiver interface, the recording module, the at least one data storage element, and the display interface, wherein the processor identifies an incomplete recording of a program event, controls the recording module to record a repeated instantiation of the program event to obtain a complete recording of the program event, and controls the at least one data storage element to replace the incomplete recording of the program event with the complete recording of the program event.

In an embodiment, the data associated with video services includes programming data; and
the processor searches the programming data to find the repeated instantiation of the program event, and schedules a recording of the repeated instantiation of the program event in response to finding the repeated instantiation of the program event in the programming data.

Preferably, the programming data comprises data selected from the group consisting of: an identifier of a programming service providing the program event; a name of a programming channel; call letters of a programming channel; call numbers of a programming channel; a title of the program event; a series name corresponding to the program event; an episode identifier corresponding to the program event; a parental guidance rating for the program event; a time duration of the program event; a content category, classification, or genre of the program event; a content description for the program event; an alphanumeric identification string; and an identification code.

In an embodiment, the processor and the display interface cooperate to generate a graphical representation of a listing of recorded program content suitable for presentation on the display, wherein the listing of recorded program content includes an entry for the incomplete recording of the program event, and wherein the entry includes a notification of when the repeated instantiation of the program event will be recorded.

Embodiments of the present invention will hereinafter be described, by way of example, with reference to the accompanying drawings, in which:
FIG. 1 is a schematic representation of an embodiment of a video services broadcasting system;
FIG. 2 is an illustration of a display screen that includes a listing of recorded program content;
FIG. 3 is a schematic representation of an embodiment of a video services receiver suitable for use in the video services broadcasting system shown in FIG. 1; and
FIG. 4 is a flow chart that illustrates an exemplary embodiment of a method of operating a video services receiver.

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The exemplary embodiments described below relate to a video delivery system such as a satellite television system. The disclosed subject matter relates to a recording function of a video services receiver (e.g., a STB). More specifically, the disclosed subject matter relates to the management and handling of partial or otherwise incomplete recordings, i.e., recordings that are missing content, are corrupted, are truncated, or the like. In one exemplary embodiment, the video services receiver finds and records a subsequent instantiation of the desired program event and replaces the incomplete recording with the newly recorded version. In an alternate embodiment, the video services receiver uses the subsequently recorded content to supplement the incomplete recording, such that the entire program event can be presented at the time of playback.

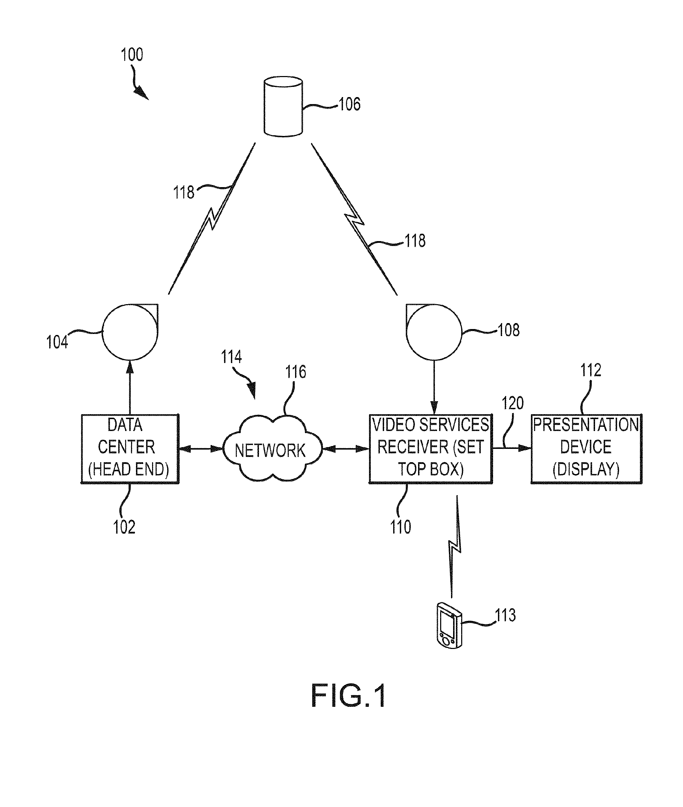

FIG. 1 shows a schematic representation of an embodiment of a video services broadcasting system 100 that is suitably configured to support the techniques and methodologies described in more detail below. The system 100 (which has been simplified for purposes of illustration) generally includes: a data center 102; an uplink transmit antenna 104; a satellite 106; a downlink receive antenna 108; a video services receiver 110 or other customer equipment; and a presentation device, such as a display device 112. The video services receiver 110 can be remotely controlled using a wireless remote control device 113. In certain embodiments, the data center 102 communicates with the video services receiver 110 via a back-channel connection 114, which may be established through one or more data communication networks 116. For the sake of brevity, conventional techniques related to satellite communication systems, satellite broadcasting systems, DVB systems, data transmission, signaling, network control, and other functional aspects of the systems (and the individual operating components of the systems) are not described in detail herein.

The data center 102 may be deployed as a headend facility and/or a satellite uplink facility for the system 100. The data center 102 generally functions to control content, signaling data, programming information, and other data sent over a high-bandwidth link 118 to any number of downlink receive components (only one downlink receive antenna 108, corresponding to one customer, is shown in FIG. 1). In practice, the data center 102 also provides content and data that can be used to populate an interactive programming guide generated by the video services receiver 110 and/or to populate an interactive recorded program listing generated by the video services receiver 110. In the embodiment shown in FIG. 1, the high-bandwidth link 118 is a direct broadcast satellite (DBS) link that is relayed by the satellite 106, although equivalent embodiments could implement the high-bandwidth link 118 as any sort of cable, terrestrial wireless and/or other communication link as desired.

The data center 102 includes one or more conventional data processing systems or architectures that are capable of producing signals that are transmitted via the high-bandwidth link 118. In various embodiments, the data center 102 represents a satellite or other content distribution center having: a data control system for controlling content, signaling information, blackout information, programming information, and other data; and an uplink control system for transmitting content, signaling information, blackout information, programming information, and other data using the high-bandwidth link 118. These systems may be geographically, physically and/or logically arranged in any manner, with data control and uplink control being combined or separated as desired.

The uplink control system used by system 100 is any sort of data processing and/or control system that is able to direct the transmission of data on the high-bandwidth link 118 in any manner. As illustrated in FIG. 1, the uplink transmit antenna 104 is able to transmit data to the satellite 106, which in turn uses an appropriate transponder for repeated transmission to the downlink receive antenna 108.

Under normal operating conditions, the satellite 106 transmits content, signaling data, blackout information, programming data, and other data to the downlink receive antenna 108, using the high-bandwidth link 118. In practical embodiments, the downlink receive antenna 108 represents the customer's satellite dish, which is coupled to the video services receiver 110. The video services receiver 110 can be realized as any device, system or logic capable of receiving signals via the high-bandwidth link 118 and the downlink receive antenna 108, and capable of providing demodulated content to a customer via the display device 112.

The display device 112 may be: a television set; a monitor; a computer display; or any suitable customer appliance with compatible display capabilities. The video services receiver 110 may be a conventional set-top box commonly used with DBS or cable television distribution systems. If required, the functionality of the video services receiver 110 may be commonly housed within the display device 112 itself. In other embodiments, the video services receiver 110 may be a portable device that may be transportable with or without the display device 112. The video services receiver 110 may also be suitably configured to support broadcast television reception, video game playing, personal video recording and/or other features as desired.

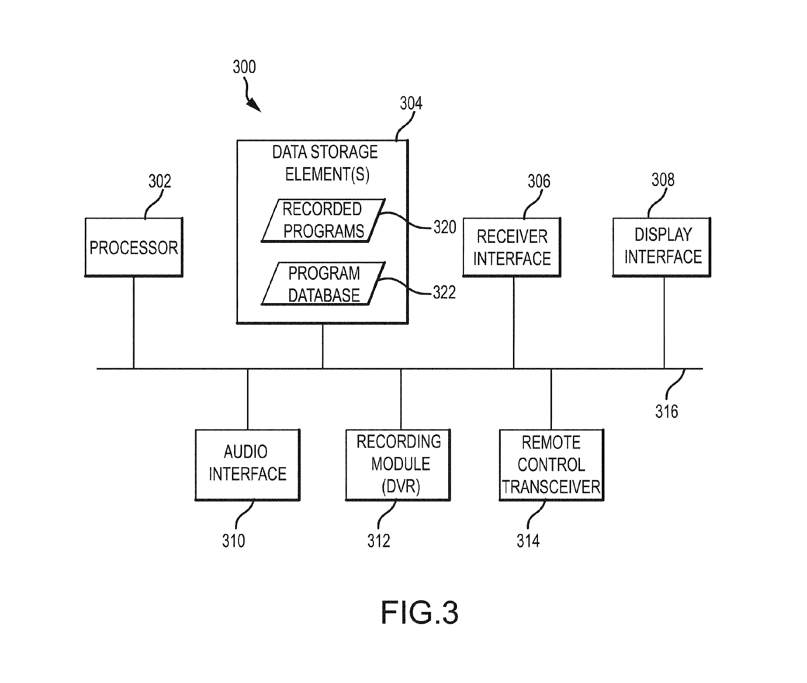

During typical operation, the video services receiver 110 receives programming (broadcast events), signaling information, and/or other data via the high-bandwidth link 118. The video services receiver 110 then demodulates, decompresses, descrambles, and/or otherwise processes the received digital data, and then converts the received data to suitably formatted video signals 120 that can be rendered for viewing by the customer on the display device 112. For the implementation described here, the video services receiver 110 includes or cooperates with a recording module (e.g., a DVR module) that records received programming for time-shifted playback. The recorded program events may include any combination of audio programs, video programs, audiovisual programs, or the like. Additional features and functions of the video services receiver 110 are described below with reference to FIG. 3.

The system 100 includes one or more speakers, transducers, or other sound generating elements or devices that are utilized for playback of sounds during operation of the system 100. These sounds may be, without limitation: the audio portion of a video channel or program; the content associated with an audio-only channel or program; audio related to the navigation of the graphical programming guide; confirmation tones generated during operation of the system; alerts or alarm tones; or the like. Depending upon the embodiment, the system 100 may include a speaker (or a plurality of speakers) attached to, incorporated into, or otherwise associated with the display device, the video services receiver 110, the remote control device 113, and/or a home theater, stereo, or other entertainment system provided separately from the system 100.

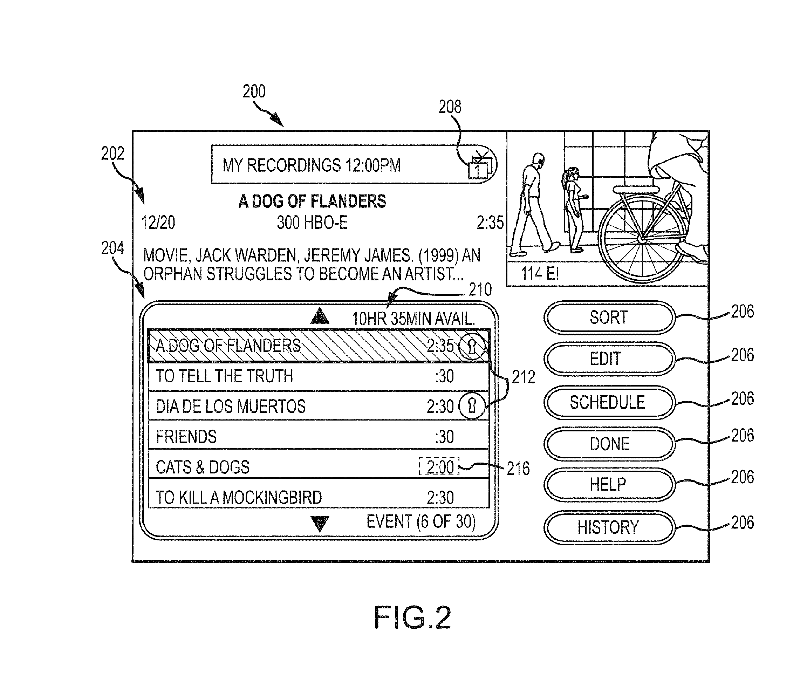

FIG. 2 is an illustration of a display screen that includes a graphical representation of a listing 200 of recorded program content, which might be provided by the video services receiver 110 shown in FIG. 1. This interactive listing 200 is merely one possible menu (with user-selectable elements) that could be generated by the video services receiver 110. The interactive listing 200 relates to recorded content, and it includes, without limitation: a program description area 202; a recorded program list window 204; and various command buttons 206. This version of the interactive listing 200 also includes a receiver, tuner, or television identifier 208 (e.g., TV1 or TV2 for a component having dual receivers or tuners). The program description area 202 may be used to provide additional information or data for a selected recorded program.

For example, the program description area 202 could be used to indicate (in text), without limitation: the designated time slot of the selected program; the title or name of the selected program; the rating (or other classification or category) of the selected program; a brief summary or abstract related to the content of the selected program; etc. In certain embodiments, the program description area 202 is a user-selectable or focusable element of the listing 200.

The recorded program list window 204 may be used to indicate content that has been recorded. The recorded program list window 204 includes entries corresponding to the recorded program events maintained by the video services receiver. In typical implementations, the recorded program list window 204 will include text to identify the recorded program events (by title, channel number, and/or other identifiers) and their respective recorded/playback times or event durations. A recorded program that has been locked will have a lock status icon 212 displayed with its listing, as shown in FIG. 2. The lock status icon 212 is removed when the program is unlocked. The recorded program list window may contain one or more entries for incomplete recordings of program events. In certain embodiments, an entry for an incomplete recording of a program event will include an appropriate indicator of the incomplete recording status. The indicator may be realized in any suitable form, e.g., an icon, a flag, a message, highlighting, or a "hover over" popup field. The embodiment depicted in FIG. 2 employs highlighting (depicted in dashed lines) as an indicator 216 to notify the viewer that the recorded program event titled "Cats & Dogs" is an incomplete recording.

The illustrated version of the recorded program list window 204 also includes an indication of the time available for recording 210. Each entry in the recorded program list window 204 might be generated and rendered as a user-selectable or focusable element of the interactive listing 200. In this regard, FIG. 2 depicts the state of the interactive listing 200 at a time when the program titled "A Dog of Flanders" has been selected. Notably, the program description area 202 identifies the title of the program, its date, its recorded/playback length, and a brief description of its content. If the program titled "Cats & Dogs" is selected, the program description area 202 may be generated to include an explanation of why the recorded program event is incomplete. In certain embodiments, the program description area 202 could be used to provide a notification of when the selected program event will be broadcast again and/or when a repeated instantiation of the program event is scheduled to be re-recorded (as described in more detail below).

Each of the command buttons 206 is generated and rendered as a user-selectable or focusable element of the interactive listing 200. This example includes six command buttons 206 that can be activated to perform different functions: Sort; Edit; Schedule; Done; Help; and History. Moreover, each of the command buttons 206 is rendered with a text label that indicates its function or feature. In practice, these functions are relevant to program recording, recorded content management, and the like.

FIG. 3 is a schematic representation of an embodiment of a video services receiver 300 suitable for use in the video services broadcasting system 100 shown in FIG. 1. The video services receiver 300 is designed and configured for providing recorded and non-recorded content to a user, by way of one or more presentation devices. Accordingly, the video services receiver 300 can be used to receive program content, record program content, and present recorded and non-recorded program content to an appropriate display for viewing by a customer or user. The video services receiver 300 also supports the automatic re-recording feature presented here, wherein an incomplete recording of a program event is detected and then subsequently re-recorded (assuming that the same event is subsequently available). This enhanced feature is described in more detail below.

This illustrated embodiment of the video services receiver 300 generally includes, without limitation: at least one processor 302; at least one data storage element 304 having a suitable amount of memory associated therewith; a receiver interface 306; a display interface 308 for the display; an audio interface 310; a recording module 312; and a remote control transceiver 314. These components and elements may be coupled together as needed for purposes of interaction and communication using, for example, an appropriate interconnect arrangement or architecture 316. It should be appreciated that the video services receiver 300 represents a "full featured" embodiment that supports various features described herein. In practice, an implementation of the video services receiver 300 need not support all of the enhanced features described here and, therefore, one or more of the elements depicted in FIG. 3 may be omitted from a practical embodiment. Moreover, a practical implementation of the video services receiver 300 will include additional elements and features that support conventional functions and operations.

The processor 302 may be implemented or performed with a general purpose processor, a content addressable memory, a digital signal processor, an application specific integrated circuit, a field programmable gate array, any suitable programmable logic device, discrete gate or transistor logic, discrete hardware components, or any combination designed to perform the functions described here. In particular, the processor 302 may be realized as a microprocessor, a controller, a microcontroller, or a state machine. Moreover, the processor 302 may be implemented as a combination of computing devices, e.g., a combination of a digital signal processor and a microprocessor, a plurality of microprocessors, one or more microprocessors in conjunction with a digital signal processor core, or any other such configuration.

The data storage elements 304 may be realized using any number of devices, components, or modules, as appropriate to the embodiment. Moreover, the video services receiver 300 could include data storage elements 304 integrated therein and/or data storage elements 304 operatively coupled thereto, as appropriate to the particular embodiment. In practice, a data storage element 304 could be realized as RAM memory, flash memory, EPROM memory, EEPROM memory, registers, a hard disk, a removable disk, or any other form of storage medium known in the art. In certain embodiments, the data storage elements 304 include a hard disk, which may also be used to support integrated DVR functions of the video services receiver 300. The data storage elements 304 can be coupled to the processor 302 such that the processor 302 can read information from, and write information to, the data storage elements 304. In the alternative, the data storage elements 304 may be integral to the processor 302. As an example, the processor 302 and a data storage element 304 may reside in a suitably designed ASIC.

As depicted in FIG. 3, the data storage elements 304 can be used to store recorded programs 320 (complete and/or incomplete recordings) for the recording module 312, and to maintain a suitably formatted database 322 (or any appropriate data structure) that contains entries for the recorded programs. A recorded program 320 may be, without limitation: a recorded audio-only program (such as a recorded radio program or a recorded music channel); a recorded video-only or image-only program; a recorded audiovisual program that conveys both audio and video or image content; or the like. In practice, the recorded programs 320 can be formatted, handled, and stored in accordance with well known and conventional DVR techniques and methodologies.

For this particular embodiment, each recorded program 320 stored by the video services receiver 300 includes a respective entry in the database 322. Accordingly, the database 322 could contain any number of different entries (including zero), subject to practical limitations related to storage capacity, the particular database management application, etc. An entry in the database 322 will include programming data related to or otherwise associated with the respective recorded program 320. For example, an entry may include some or all of the following information, without limitation: an identifier of the programming service that provided the recorded program even; the name of the programming channel; call letters and/or call numbers of the channel; the title of the program event; the series name corresponding to the program event (e.g., "The Simpsons" or "Wheel Of Fortune"); a parental guidance rating for the program event; an episode identifier corresponding to the program event (e.g., "Episode 24" or "Episode 4, Season 3"); the time duration of the program event; a recording date/time stamp; a content category, genre, or classification of the program event; a brief description of the content; an alphanumeric identification string (e.g., "Program 2345676" or "Event 48d345tcr"); an identification code; or the like. Some or all of this programming data can be used to search for repeated instantiations of program events that have already been recorded by the video services receiver 300 in an incomplete manner.

The programming data could be delivered to the video services receiver 300 during the normal scheduled broadcast of program events, or it could be delivered to the video services receiver 300 prior to scheduled broadcasts. For example, the programming data could be sent to the video services receiver 300 using one or more overhead signaling and/or control channels. The manner in which the video services receiver 300 obtains this information is unimportant for purposes of this description, and the specific data transmission methodology may vary from one deployment to another.

Notably, any or all of the programming data may be considered to be program-designating information that identifies a recorded program event. In this regard, the information that identifies a program event could be realized in any suitable format or data structure. For example, program-designating information could be the channel number of the service that provided the recorded program, along with the title of the program. Alternatively, the program-designating information could be any alphanumeric string that serves to distinguish each unique program event that is available during a designated window of time.

Although the recorded programs 320 and the database 322 are depicted separately, it should be appreciated that the recorded programs 320 and the database entries could actually be stored together in a common data storage element 304. For example, the data that represents a recorded program 320 may also represent the contents of a database entry as described above. Thus, data associated with a recorded program 320 could be utilized in lieu of distinct database entries when performing the methods and processes presented below.

The receiver interface 306 is coupled to the customer's satellite antenna, and the receiver interface 306 is suitably configured to receive and perform front end processing on signals transmitted by satellite transponders. In this regard, the receiver interface 306 can receive data associated with any number of services (e.g., video services), including data that is used to populate the database 322, on-screen menus, GUIs, interactive programming interfaces, etc. The receiver interface 306 may leverage conventional design concepts that need not be described in detail here.

The display interface 308 is operatively coupled to one or more display elements (not shown) at the customer site. The display interface 308 represents the hardware, software, firmware, and processing logic that is utilized to render graphics, images, video, and other visual indicia on the customer's display. In this regard, the display interface 308 facilitates the presentation of programs on the display(s) at the customer premises. For example, the display interface 308 is capable of providing graphical interactive programming interfaces for video services, interactive listings of recorded programs, interactive graphical menus, and other GUIs for display to the user. The display interface 308 may leverage conventional design concepts that need not be described in detail here.

The audio interface 310 is coupled to one or more audio system components (not shown) at the customer site. The audio interface 310 represents the hardware, software, firmware, and processing logic that is utilized to generate and provide audio signals associated with the operation of the video services receiver 300. Depending upon the particular embodiment, the audio interface 310 may be tangibly or wirelessly connected to the audio portion of a television or monitor device, or it may be tangibly or wirelessly connected to a sound system component that cooperates with the television or monitor device.

The recording module 312 is operatively coupled to the receiver interface 306 to record program events provided by the incoming services. In practice, the recording module 312 may include, cooperate with, or be realized as hardware, software, and/or firmware that is designed to provide traditional DVR features and functions for the video services receiver 300. Accordingly, the recording module 312 may record video programs provided by video services, audio-only programs provided by audio services, or the like. As mentioned above, the recording module 312 cooperates with the data storage elements 304 to store the recorded programs 320 as needed.

The remote control transceiver 314 performs wireless communication with one or more compatible remote devices, such as a remote control device, a portable computer, an appropriately equipped mobile telephone, or the like. The remote control transceiver 314 enables the user to remotely control various functions of the video services receiver 300, in accordance with well known techniques and technologies. In certain embodiments, the remote control transceiver 314 is also used to wirelessly receive requests that are related to the generation, display, control, and/or operation of recorded program listings. For example, the remote control device 113 (see FIG. 1) could be used to initiate a playback command to request playback of a recorded program.

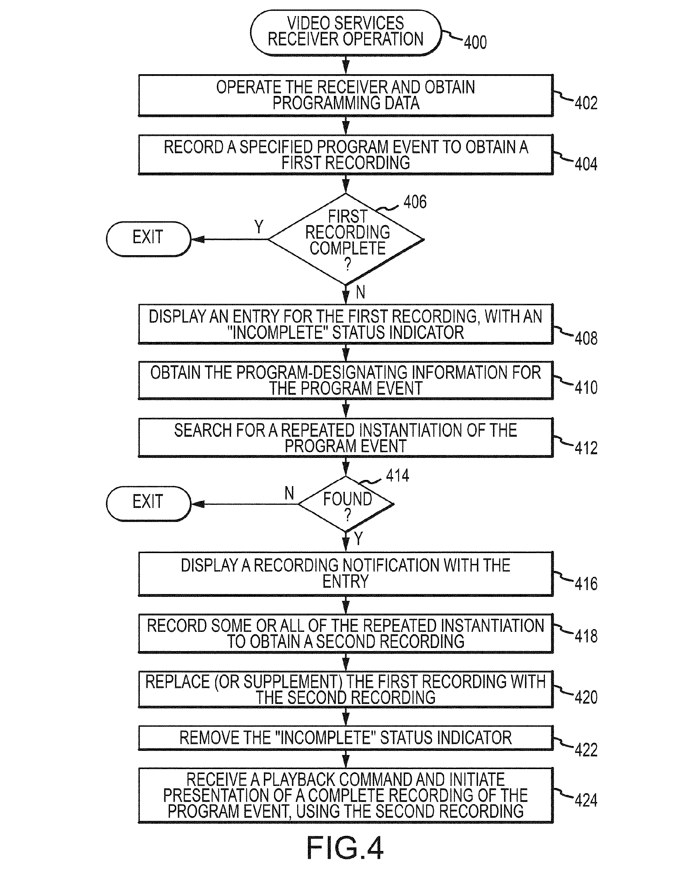

The system 100 (FIG. 1) and the video services receiver 300 (FIG. 3) can be used to address situations where incomplete recordings have been saved, resulting in recorded program events that might be truncated, corrupted, or otherwise missing some content. FIG. 4 is a flow chart that illustrates an embodiment of a process 400 for operating a video services receiver. The various tasks performed in connection with the process 400 may be performed by software, hardware, firmware, or any combination thereof. For illustrative purposes, the following description of the process 400 refers to elements mentioned above in connection with FIGS. 1 to 3. In practice, portions of the process 400 may be performed by different elements of the described system, e.g., a DVR module, a processor, a storage element, or the like. It will be appreciated that the process 400 may include any number of additional or alternative tasks, the tasks shown in FIG. 4 need not be performed in the illustrated order, and the process 400 may be incorporated into a more comprehensive procedure or process having additional functionality not described in detail herein. Moreover, one or more of the tasks shown in FIG. 4 could be omitted from an embodiment of the process 400 as long as the intended overall functionality remains intact.

The illustrated embodiment of the process 400 begins by operating the video services receiver to obtain program content, programming data, and program-designating information to the user's presentation device (task 402). For this example, the program content represents video programming content associated with different program events, although the program content could alternatively be audio-only content, still image content, video-only content, etc. As explained previously, each program event is preferably identified by corresponding program-designating information that can be processed by the video services receiver as needed. For this example, it is assumed that the video services receiver is currently receiving at least one program event that is to be recorded. Accordingly, the process 400 continues by recording at least a portion of (preferably, the entirety of) a specified program event to obtain a first recording (task 404).

During or after the recording, the process 400 determines whether or not the first recording represents an incomplete recording of the program event (query task 406). If the first recording is a complete recording (the "Yes" branch of query task 406), then the process 400 may exit or return to task 402. If the process 400 determines that the first recording is incomplete, then the process 400 continues in an attempt to find "replacement" content to supplement or replace the first recording. It should be appreciated that incomplete recordings may be stored at the video services receiver for any number of reasons. For example, the video services receiver may be configured to detect that the first recording represents a truncated version of the program event (i.e., a beginning or ending portion of the program event is missing). As another example, the video services receiver may be designed to detect degradation in the received video signal that conveys the program event during the recording process. In this regard, a network connection may be temporarily dropped, the video signal may be susceptible to noise, there may be a power surge or temporary outage at the user's household, or the like. As yet another example, the hard disk used to store recorded programs may reach its full capacity while the video services receiver is recording the program event. These and other scenarios may result in an incomplete recording.

In practice, the video services receiver determines or otherwise detects an incomplete recording using one or more techniques or methodologies. For example, the process 400 may compare the scheduled start and stop times of the program event to the actual recorded time period to determine whether or not the entire program has been captured. As another example, the process 400 may monitor one or more quality of service parameters during the recording process to determine whether or not some of the content was dropped. As yet another example, the process 400 could perform a post-recording diagnostic scan or integrity check on recorded program events to determine whether or not certain characteristics are indicative of a complete or incomplete recording. Moreover, start and stop flags in the data stream could be used to detect if the recording is complete (if both a start flag and a stop flag are present, then the recording is considered to be complete; if one or both are missing, then the recording is considered to be incomplete).

This description assumes that query task 406 identifies the first recording as an incomplete recording of the program event. In response to this determination, the video services receiver generates a graphical representation of a listing of recorded program content (see, for example, FIG. 2) that includes an entry for the incomplete recording. This entry is displayed along with an indicator of the incomplete recording status (task 408). Thus, the user can quickly and easily see that the recording of this particular event does not include all of the desired program content.

The exemplary embodiment of the process 400 obtains the program-designating information that identifies the program event of interest (task 410) and uses that information to search the available program listings for a repeated instantiation of the same program event (task 412). The program-designating information enables the video services receiver to traverse received programming data (provided by the video services system) and locate a future broadcast, stream, or airing of the same program event for purposes of scheduling another attempt at recording the program event. In certain embodiments where the video services receiver is web-enabled, task 412 may generate an internet, web-based, or other network search query for online content corresponding to the program event. In this regard, the process 400 may attempt to find a downloadable video file, a video clip that is scheduled for streaming at a designated time in the future, a link to a file transfer protocol site, internet content that is not generally available to the public (e.g., content that is available from a video-on-demand service), or the like.

If a repeated instantiation of the desired program event cannot be found (the "No" branch of query task 414), then the process 400 exits or returns to task 402. This description assumes that the search is successful. Accordingly, the video services receiver finds at least one repeated instantiation of the program event and schedules a re-recording of at least a portion of the program event. The process 400 may also display a suitably formatted notification (task 416) with the respective recorded program entry, where the notification indicates when the repeated instantiation of the program event will be recorded. This notification is helpful to allow the user to decide whether or not to playback the incomplete recording, wait for the re-recording to occur, or delete the recording.

This example assumes that the video services receiver is indeed able to record the repeated instantiation of the program event at the scheduled time. In other words, there are sufficient tuner resources and no scheduling conflicts that would otherwise prevent a full re-recording. Accordingly, the process 400 continues by recording some or all of the repeated instantiation of the program event to obtain a second recording (task 418). In preferred embodiments, task 418 re-records the entire program event, resulting in a complete recording of the program event. Alternatively, the video services receiver could be configured to re-record certain segments of the program event as needed to compensate for the content that is missing from the original incomplete recording. At this time, the process 400 can replace or supplement the first recording with the second recording (task 420), such that a complete recording is made available. In the preferred embodiment, the incomplete recording is deleted and replaced with the full and complete re-recording of the same program event. Alternatively, a complete recording may be obtained by combining at least some of the first recording with at least some of the second recording. After a complete recording has been obtained, the process 400 removes the "incomplete recording" status indicator that had previously been displayed with the respective entry for the recorded program (task 422).

The full version of the recorded program event can be maintained by the video services receiver until deleted. In accordance with conventional operating techniques, the video services receiver may receive an appropriate playback command (e.g., a user-initiated command) and, in response to the playback command, initiate the presentation of the complete recording of the program event (task 424). Notably, the presentation of the complete recording will be associated with the playback of the re-recorded content.

In practice, the majority of the process 400 can be automatically performed in a manner that is transparent to the user. Indeed, the video services receiver need not display the "incomplete" status indicator or the notification regarding the scheduled recording of the next instantiation of the desired program event. Thus, the user need not be aware that the original recording of the program event was incomplete or flawed. Instead, the process 400 can be performed in the background to provide a full and complete version of the recorded program event to the user in response to a playback command (assuming, of course, that the repeated instantiation of the program event is available for recording before the user requests playback).

It will be apparent that variations in, and modifications to, the invention as described and illustrated may be made within the scope of the accompanying claims.

## Claims

1. A method of managing recorded program content at a video services receiver, the method comprising:
identifying, at the video services receiver, an incomplete recording of a program event;
obtaining, at the video services receiver, program-designating information that identifies the program event;
searching, with the video services receiver, available program listings for a repeated instantiation of the program event, wherein the searching is based on the program-designating information;
recording the repeated instantiation of the program event at the video services receiver, to obtain a complete recording of the program event; and
replacing the incomplete recording of the program event with the complete recording of the program event.

2. A method as claimed in Claim 1, wherein the searching comprises generating an internet search query for online content corresponding to the program event.

3. A method as claimed in Claim 1 or Claim 2, further comprising generating, with the video services receiver, a graphical representation of a listing of recorded program content suitable for presentation on a display, wherein the listing of recorded program content includes an entry for the incomplete recording of the program event, and wherein the entry includes an indicator of an incomplete recording status.

4. A method as claimed in Claim 3, wherein the entry includes a notification of when the repeated instantiation of the program event will be recorded.

5. A method as claimed in Claim 3 or Claim 4, further comprising removing the indicator after replacing the incomplete recording of the program event with the complete recording of the program event.

6. A method of operating a video services receiver that records program content and presents recorded program content, the method comprising:
recording at least a portion of a program event that is identified by program-designating information, to obtain a first recording of the program event;
determining that the first recording represents an incomplete recording of the program event;
finding a repeated instantiation of the program event that is identified by the program-designating information;
recording at least a portion of the repeated instantiation of the program event, to obtain a second recording of the program event; and
thereafter, presenting a complete recording of the program event,
wherein the complete recording of the program event comprises the second recording of the program event.

7. A method as claimed in Claim 6, wherein:
the second recording of the program event includes all of the repeated instantiation of the program event; and
the method further comprises replacing the first recording of the program event with the second recording of the program event.

8. A method as claimed in Claim 6 or Claim 7, wherein presenting the complete recording of the program event comprises presenting at least some of the first recording of the program event combined with at least some of the second recording of the program event.

9. A method as claimed in any of Claims 6 to 8, wherein the determining comprises detecting degradation in a signal received at the video services receiver, wherein the signal conveys the program event corresponding to the first recording.

10. A method as claimed in any of Claims 6 to 9, wherein the determining comprises detecting that the first recording represents a truncated version of the program event.

11. A method as claimed in any of Claims 6 to 10, further comprising receiving a playback command at the video services receiver, wherein the presenting is initiated in response to the playback command.

12. A video services receiver for providing recorded and non-recorded content to a user, the video services receiver comprising:
a receiver interface to receive data associated with video services;
a recording module coupled to the receiver interface to record program events provided by the video services;
at least one data storage element coupled to the recording module to store recorded content for the recording module;
a display interface for a display operatively coupled to the video services receiver, the display interface facilitating presentation of recorded and non-recorded program events on the display; and
a processor coupled to the receiver interface, the recording module, the at least one data storage element, and the display interface, wherein the processor identifies an incomplete recording of a program event, controls the recording module to record a repeated instantiation of the program event to obtain a complete recording of the program event, and controls the at least one data storage element to replace the incomplete recording of the program event with the complete recording of the program event.

13. A video services receiver as claimed in Claim 12, wherein:
the data associated with video services includes programming data; and
the processor searches the programming data to find the repeated instantiation of the program event, and schedules a recording of the repeated instantiation of the program event in response to finding the repeated instantiation of the program event in the programming data.

14. A video services receiver as claimed in Claim 13, wherein the programming data comprises data selected from the group consisting of: an identifier of a programming service providing the program event; a name of a programming channel; call letters of a programming channel; call numbers of a programming channel; a title of the program event; a series name corresponding to the program event; an episode identifier corresponding to the program event; a parental guidance rating for the program event; a time duration of the program event; a content category, classification, or genre of the program event; a content description for the program event; an alphanumeric identification string; and an identification code.

15. A video services receiver as claimed in any of Claims 12 to 14, wherein the processor and the display interface cooperate to generate a graphical representation of a listing of recorded program content suitable for presentation on the display, wherein the listing of recorded program content includes an entry for the incomplete recording of the program event, and wherein the entry includes a notification of when the repeated instantiation of the program event will be recorded.
